# EUROPEAN PATENT APPLICATION

(11) **EP 2 341 115 A1**
(43) Date of publication of application: **06.07.2011**
(21) Application number: 11002302.5
(22) Date of filing: 25.02.2010
(51) Int. Cl.: C09J 7/02

(54) **Double-sided pressure-sensitive adhesive tape and release liner**

(30) Priority: 06.03.2009 JP 2009053091
(62) Divisional of application: 10154601.8
(71) Applicant: Nitto Denko Corporation, Ibaraki-shi Osaka 567-8680 (JP)
(72) Inventor: Hirose, Isao, Ibaraki-shi Osaka 567-8680 (JP); Kinpara, Kazuhiko, Ibaraki-shi Osaka 567-8680 (JP); Tsubaki, Hiroyuki, Ibaraki-shi Osaka 567-8680 (JP)
(74) Representative: Grünecker, Kinkeldey, Stockmair & Schwanhäusser Anwaltssozietät

(57) **Abstract**

The double-sided pressure-sensitive adhesive tape of the present invention includes, on at least one side of a pressure-sensitive adhesive body, a release liner having a notch and/or slit in at least one edge in the width direction.
When the tape is attached to an adherend with the tape curved or bent in the tape width direction, the release liner held on the other adhesive face is free from wrinkles and floating.

## Description

### BACKGROUND OF THE INVENTION

### Field of the Invention

The present invention relates to double-sided pressure-sensitive adhesive tapes. Specifically, it relates to double-sided pressure-sensitive adhesive tapes capable of being attached to an adherend having a bend or curve, with a release liner held and with the tape curved or bent in a width direction. Furthermore, it relates to methods for attaching the double-sided pressure-sensitive adhesive tapes to an adherend having a bend and/or curve. In addition, it relates to release liners capable of being used for the double-sided pressure-sensitive adhesive tapes.

### Description of the Related Art

Double-sided pressure-sensitive adhesive tapes are widely used in various industrial fields such as household electric appliances, automobiles, and office automation equipments as joining means having good workability and high adhesion reliability. These double-sided pressure-sensitive adhesive tapes often include release liners (tapes with a releasing function) on surfaces (adhesive faces) of the pressure-sensitive adhesive layers in order to protect the adhesive faces (for example, see Japanese Unexamined Patent Application Publication (JP-A) No. 2002-309227, JP-A No. 2005-350650, and JP-A No. 2007-9138).

When articles are joined together with the double-sided pressure-sensitive adhesive tape having such release liners, usually, first, one of the adhesive faces of the double-sided pressure-sensitive adhesive tape, which holds a release liner on the other face, is attached to one of the articles, and then, the release liner is released to be attached to the other article. At this time, in a certain application or fabrication process, an interim product in which a double-sided pressure-sensitive adhesive tape is held on one of the articles is sometimes transported or stored for a certain period. Namely, the double-sided pressure-sensitive adhesive tape sometimes handled or stored with the release liner held on one of the adhesive faces.

At the time, when the article (adherend) attached to a double-sided pressure-sensitive adhesive tape is, for example, a long article having a bend or curve in the width direction, if the double-sided pressure-sensitive adhesive tape is attached so as to fit the bend or curve in the adherend with the tape curved or bent in the tape width direction, "wrinkles" of the release liner or "floating" from the pressure-sensitive adhesive body sometimes occur at the bent or curved part because the release liner is generally relatively rigid, and consequently, the handling or storage property is adversely affected.

On this account, commonly, such an adherend having a bend or curve employs the following process or the like: double-sided pressure-sensitive adhesive tapes each having a width wider than that of the adherend are linearly attached, and then the excess part lying from the adherend is cut off. However, the process has problems of the wasteful pressure-sensitive adhesive tape and poor working efficiency due to increased working process.

### SUMMARY OF THE INVENTION

Accordingly, an object of the present invention is to provide a double-sided pressure-sensitive adhesive tape which is free from a wrinkle and floating of a release liner even when the double-sided pressure-sensitive adhesive tape is attached to an adherend having a bend or curve with the release liner held and with the tape bent in the width direction, and a method for attaching the tape. Furthermore, an object of the present invention is to provide a release liner capable of being used for the double-sided pressure-sensitive adhesive tape and the like.

The present inventors have thoroughly studied in order to achieve the object, as a result, have found that, when a notch and/or slit is arranged in an edge in the width direction of the release liner, a double-sided pressure-sensitive adhesive tape which is free from the wrinkle and floating of the release liner even when the double-sided pressure-sensitive adhesive tape is attached with the tape bent in the width direction can be obtained, and the present invention has been accomplished.

Specifically, according to an embodiment of the present invention, there is provided a double-sided pressure-sensitive adhesive tape which includes a pressure-sensitive adhesive body and a release liner arranged on at least one side of the pressure-sensitive adhesive body and having a notch and/or slit in at least one edge in a width direction of the release liner.

In the double-sided pressure-sensitive adhesive tape of the invention, it is preferable that the release liner has two or more notches and/or slits.

In the double-sided pressure-sensitive adhesive tape of the invention, it is preferable that the notch and/or slit does not cut across a full-width of the release liner.

In the double-sided pressure-sensitive adhesive tape of the invention, it is preferable that the release liner has the notch and/or slit in both the edges in its width direction.

Furthermore, according to another embodiment of the present invention, there is provided a method including attaching a double-sided pressure-sensitive adhesive tape to an adherend having a bend and/or curve, with a release liner held on one of the sides of the pressure-sensitive adhesive body and with the tape bent in the width direction.

Furthermore, according to another embodiment of the present invention, there is provided a release liner including a notch and/or slit in at least one edge in a width direction of the release liner.

The double-sided pressure-sensitive adhesive tape of the present invention includes the above structure, and thereby, even when the tape is attached to an adherend having a bend or curve, with the release liner held and with the tape bent in the width direction, the release liner is free from wrinkles or floating. Accordingly, the double-sided pressure-sensitive adhesive tape can be suitably used for parts having curves in the width direction such as automobile parts.

### BRIEF DESCRIPTION OF THE DRAWINGS

FIG. 1 is a schematic diagram (plan view) showing exemplary notches arranged in an edge in a width direction of a release liner.
FIG. 2 is a schematic diagram (plan view) showing exemplary slits arranged in an edge in the width direction of a release liner.
FIG. 3 is a schematic diagram (plan view) showing an exemplary slit not arranged in an edge in the width direction of a release liner.
FIG. 4 is a schematic diagram (plan view) showing an exemplary slit cutting across the full-width of a release liner.
FIG. 5 is a schematic diagram (plan view) showing an exemplary release liner having notches or the like according to an embodiment of the present invention.
FIG. 6 is a schematic diagram (plan view) showing an exemplary release liner having notches or the like according to an embodiment of the present invention.
FIG. 7 is a schematic diagram (plan view) showing an exemplary release liner having notches or the like according to an embodiment of the present invention.
FIG. 8 is a schematic diagram (plan view) showing an exemplary release liner having notches or the like according to an embodiment of the present invention.
FIG. 9 is a schematic diagram (plan view) showing an exemplary release liner having notches or the like according to an embodiment of the present invention.
FIG. 10 is a schematic diagram (plan view) showing an exemplary release liner having notches or the like according to an embodiment of the present invention.
FIG. 11 is a schematic diagram (plan view) showing an exemplary release liner having notches or the like according to an embodiment of the present invention.
FIG. 12 is a schematic diagram (plan view) showing an exemplary release liner having notches or the like according to an embodiment of the present invention.
FIG. 13 is a schematic diagram (plan view) showing an exemplary release liner having notches or the like according to an embodiment of the present invention.
FIG. 14 is a schematic diagram (plan view) showing an exemplary release liner having notches or the like according to an embodiment of the present invention.
FIG. 15 is a schematic diagram (plan view) showing an angle between a slit and a width direction of a release liner.
FIG. 16 is a schematic diagram (plan view) showing a distance between the leading ends of opposed notches (or slits).
FIG. 17 is a schematic diagram (plan view) showing an exemplary release liner having notches or the like according to an embodiment of the present invention.
FIG. 18 is a schematic diagram (plan view) showing an exemplary release liner having notches or the like according to an embodiment of the present invention.
FIG. 19 is a schematic diagram (plan view) typically showing a deformation of the notches in a curved part of a double-sided pressure-sensitive adhesive tape of the present invention (with the release liner having notches held) when the tape is curved in a tape width direction.
FIG. 20 is a schematic diagram (plan view) showing a release liner in Example 1.
FIG. 21 is a schematic diagram (plan view) showing a release liner in Example 2.

### DESCRIPTION OF THE PREFERRED EMBODIMENTS

A double-sided pressure-sensitive adhesive tape of the present invention is a straight line-shaped double-sided pressure-sensitive adhesive tape and includes a release liner on at least one of adhesive faces of a pressure-sensitive adhesive body of which both the surfaces are the adhesive faces (double-sided pressure-sensitive adhesive body), and the release liner has a notch and/or slit (one or more notches and/or slits) in at least one edge in the width direction (namely, side edge). Hereinafter, a "release liner having a notch and/or slit in at least one edge in the width direction" is also referred to as a "release liner having a notch or the like". In addition, a release liner other than the "release liner having a notch or the like" (a release liner having neither a notch nor slit in an edge in the width direction) is also referred to as an "additional release liner". Furthermore, in the invention, a "double-sided pressure-sensitive adhesive tape" basically refers to one including a "release liner", and a "residual part of the double-sided pressure-sensitive adhesive tape from which the release liner is released" is also referred to as a "pressure-sensitive adhesive body". Furthermore, a surface of a pressure-sensitive adhesive layer of the pressure-sensitive adhesive body is also referred to as an "adhesive face". Furthermore, the double-sided pressure-sensitive adhesive tape of the present invention includes a roll of a straight line-shaped double-sided pressure-sensitive adhesive tape.

The double-sided pressure-sensitive adhesive tape of the present invention may be, for example, a double separator-type double-sided pressure-sensitive adhesive tape holding release liners on both adhesive faces of the pressure-sensitive adhesive body, and a single separator-type double-sided pressure-sensitive adhesive tape in which a release liner having release faces (release layer surfaces) on both the sides is held on one of the adhesive faces of the pressure-sensitive adhesive body and the other adhesive face of the pressure-sensitive adhesive body is protected with the release layer on the back face by rolling. When the double-sided pressure-sensitive adhesive tape of the present invention is the double separator-type double-sided pressure-sensitive adhesive tape, the adhesive tape may include the release liners each having a notch or the like on both sides of the pressure-sensitive adhesive body, or may include an additional release liner on one of the sides of the pressure-sensitive adhesive body. Furthermore, the pressure-sensitive adhesive body in the double-sided pressure-sensitive adhesive tape of the present invention may or may not include a notch and/or slit.

### Release Liner Having A Notch or The Like

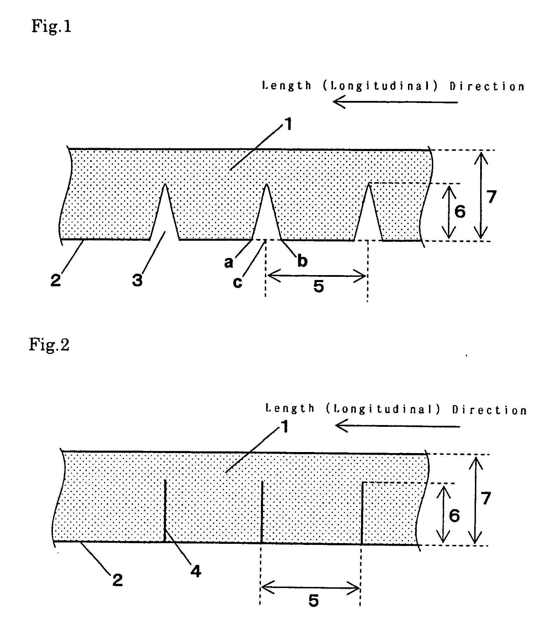

A release liner having a notch or the like in the double-sided pressure-sensitive adhesive tape of the present invention includes a notch and/or slit in at least one edge in a width direction. In the invention, a "notch" means a part where a part of a release liner is notched (see FIG. 1). Furthermore, a "slit" means a cut made in a release liner (see FIG. 2). FIGS. 1 and 2 are schematic diagrams (plan views) showing exemplary notches and slits arranged in an edge in the width direction of a release liner, respectively. In FIGS. 1 to 4 and 15 to 19, a reference numeral 1 denotes a release liner, 2 denotes an edge in the width direction (side edge) of the release liner, 3 denotes a notch, and 4 denotes a slit.

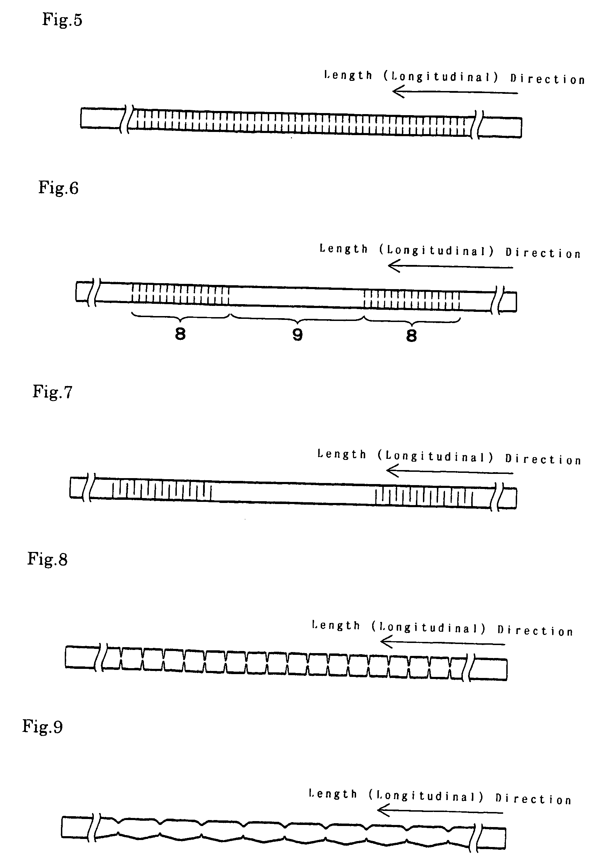

As shown in FIGS. 5 to 14, a notch shape is not specifically limited. For example, the shape may be a triangle with a rounded leading end or a rectangle with a rounded corner. A slit shape is not specifically limited, but preferably linear. Hereinafter, a "notch and/or slit" is also generically referred to as a "notch or the like".

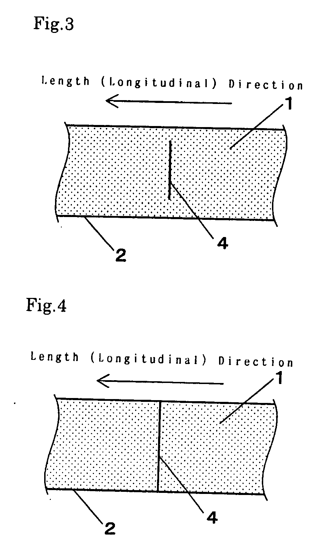

The release liner is required to have the notch or the like in an edge in the width direction of the release liner. Here, "having in an edge in the width direction" means, as shown in FIGS. 1 and 2, that an end of the notch or slit in the width direction reaches an edge in the width direction (side edge) of the release liner. In other words, it means that an end of the notch in the width direction is open at an edge in the width direction of the release liner or that an end of the slit in the width direction penetrates to an edge in the width direction of the release liner. When the notch and the like is arranged so as not to include an edge in the width direction of the release liner (see FIG. 3), the effect of the invention cannot be exerted. FIG. 3 is a schematic diagram (plan view) showing an exemplary slit not arranged in an edge in the width direction of the release liner.

The notch or the like must not cut across a full-width of the release liner. When the notch or the like cuts across the full-width of the release liner (when the notch or the like is extended from one edge to the other edge in the width direction of the release liner), the release liner is once completely cut along the notch or the like, whereby the release liner cannot be released at once, and consequently the release workability sometimes decreases. FIG. 4 is a schematic diagram (plan view) showing an exemplary slit cutting across the full-width of the release liner.

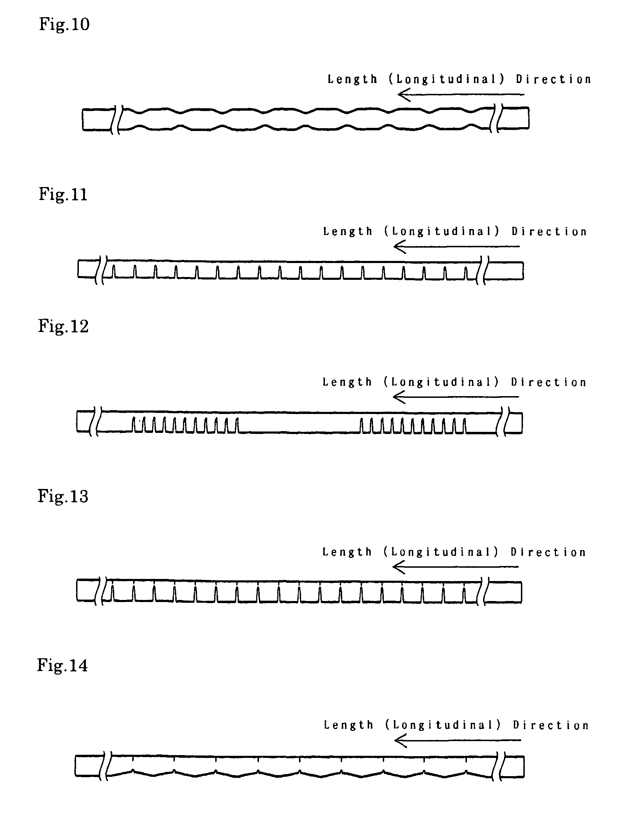

FIGS. 5 to 14 are schematic diagrams (plan views) exemplifying the release liners. The release liner may include the notches or the like only in one of the edges in the width direction (namely, one of the side edges) (see FIGS. 11 and 12), or may include notches or the like in the both edges in the width direction (namely, the both side edges) (see FIGS. 5 to 10, 13, and 14). Among them, the release liner preferably includes the notches or the like in both the edges in the width direction (namely, the both side edges) because such structure exerts higher inhibition effect on the "wrinkle" of the release liner or the "floating" of the release liner from the pressure-sensitive adhesive body in a bent part. When the release liner includes the notches or the like in both the edges in the width direction, the notches or the like in both the edges may be arranged so as to face each other (see FIGS. 5, 6, 8 to 10, 13, and 14) or not to face each other (see FIG. 7).

Furthermore, the release liner may include either the notches or slits (see FIGS. 5 to 12) or both the notches and slits (see FIGS. 13 and 14). The release liner preferably includes the slits from the viewpoints of easier processability and less "floating" in a bent part when attaching.

The release liner includes the notches or the like in at least one area in the length direction (longitudinal direction). Depending on the application of the double-sided pressure-sensitive adhesive tape, the shape of an adherend, or the like, the release liner may include the notches or the like in all area in the length direction (see FIGS. 5, 8 to 11, 13, and 14), or may include areas with the notches or the like and without the notches or the like (see FIGS. 6, 7, and 12). Though not critical, the release liner preferably includes the notches or the like in all area in the length direction from the viewpoints of its processability and versatility. In FIG. 6, a reference numeral 8 denotes the area with the notches or the like, and 9 denotes the area without the notches or the like. The number of the notches or the like in the release liner varies depending on the length of the release liner (the length of the double-sided pressure-sensitive adhesive tape), the application of the double-sided pressure-sensitive adhesive tape, or the like, and is not specifically limited, but preferably two or more, more preferably three or more, and yet more preferably five or more. In the case of the release liner having the areas with the notches or the like and without the notches or the like, the number of the notches or the like in the area with the notches or the like per area is not specifically limited, but preferably two or more, more preferably three or more, and yet more preferably five or more.

The length (full-length) of the release liner varies depending on the application of the double-sided pressure-sensitive adhesive tape and the like, and is not specifically limited, but preferably from 10 to 1000 m, and more preferably from 20 to 800 m. Furthermore, the width (full-width) of the release liner varies depending on the application of the double-sided pressure-sensitive adhesive tape and the like, and is not specifically limited, but preferably from 2 to 100 mm, more preferably from 2 to 50 mm, yet more preferably from 2 to 30 mm, and most preferably from 3 to 20 mm. The full-length and full-width of the release liner are often the same or substantially the same as those of the double-sided pressure-sensitive adhesive tape or pressure-sensitive adhesive body, respectively.

In the area with the notches or the like in the release liner, the distance between a notch or the like and the adjacent notch or the like in the length direction of the release liner (hereinafter, also simply referred to as the "adjacent notch or the like") varies depending on the application of the double-sided pressure-sensitive adhesive tape and the like, and is not specifically limited, but preferably from 1 to 30 mm, more preferably from 1 to 10 mm, and yet more preferably from 2 to 6 mm. When the distance is less than 1 mm, the difficulty of processing sometimes increases, or machine accuracy or pitch accuracy (the accuracy of the distance) sometimes decreases, and when the distance is over 30 mm, the release liner sometimes floats during attaching to a curvature (bent or curved part). Here, the distance between a notch or the like and the adjacent notch or the like means the distance between a center position of a notch or the like on the edge in the width direction (side edge) and a center position of the adjacent notch or the like on the edge in the width direction (side edge) (see FIGS. 1 and 2). In FIGS. 1 and 2, a reference numeral 5 denotes a distance between a notch or the like and the adjacent notch or the like in the length direction of the release liner. In FIG. 1, reference marks "a" and "b" are the positions of both ends of the notch on the edge in the width direction, and a reference mark "c" is the center position of the notch on the edge in the width direction. The reference mark "c" is a midpoint of a line segment "ab". Furthermore, the term "adjacent" means adjacent in the same edge in the width direction of the release liner (side edge).

The ratio of the length of the notch or the like in the width direction with respect to the full-width of the release liner [(the length of the notch or the like in the width direction)/(the full-width of the release liner) × 100] (%) varies depending on the application of the double-sided pressure-sensitive adhesive tape or the number or arrangement of the notches or the like, but is preferably from 5 to 90%, more preferably from 20 to 70%, and yet more preferably from 30 to 70%. When the ratio is less than 5%, the inhibition effect on the "wrinkle" or "floating" in a bent or curved part is not sometimes obtained, and when the ratio is over 90%, the strength of the release liner is reduced, whereby the release liner is sometimes readily broken during releasing, causing decrease in the release workability. In FIGS. 1, 2, and 15, a reference numeral 6 denotes the length of the notch or the like in the width direction and 7 denotes the full-width of the release liner.

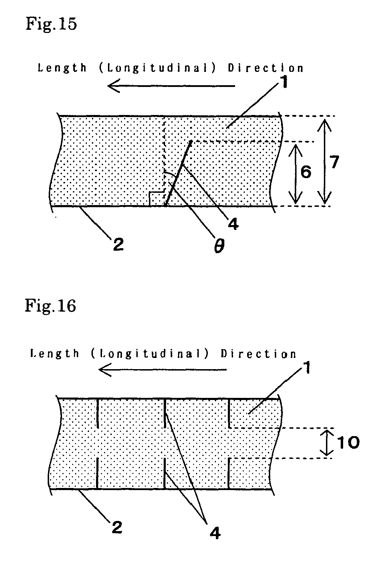

When the release liner includes the slit, the angle (absolute value) between the slit and the width direction (direction orthogonal to the length direction) of the release liner is preferably from 0 to 40° and more preferably from 0 to 20° (see FIG. 15). In FIG. 15, a symbol θ shows the angle between the slit and the width direction (direction orthogonal to the length direction) of the release liner.

When the release liner includes the opposed notches or the like (the notches or the like facing each other), the distance between the leading ends of notches or the like opposing (facing) each other (distance in the width direction between the leading end of a notch or the like and the leading end of the opposed notch or the like) is preferably 1 mm or more and more preferably from 2 to 6 mm (see FIG. 16). When the distance is less than 1 mm, the release liner is sometimes broken during releasing, causing decrease in the release workability. Here, "the leading end of a notch or the like" means the position in a notch or the like farthest from the edge having the notch and the like in the width direction. In FIG. 16, a reference numeral 10 denotes the distance between the leading ends of the slits opposing (facing) each other.

Hereinafter, preferred configurations of the release liner having a notch or the like in the present invention will be described with specific embodiments.

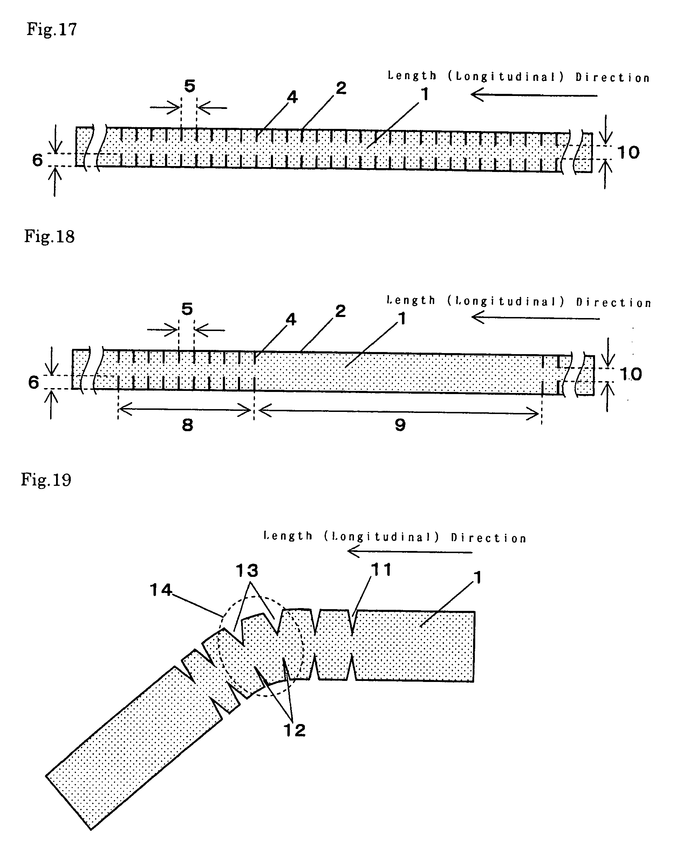

FIG. 17 shows a release liner having slits in the both edges in the width direction. The release liner in FIG. 17 includes the slits in all area in the length direction at equal intervals (namely, the slits are arranged in the length direction continuously). The length 6 of the notch or the like in the width direction (the length of the slit in an edge) is preferably from 2 to 5 mm, and more preferably from 2.5 to 4 mm. The distance 10 between the leading ends of the slits opposing each other is preferably from 1 to 6 mm and more preferably from 2 to 5 mm. The full-width of the release liner is preferably' from 5 to 16 mm and more preferably from 8 to 12 mm. The distance 5 between a notch or the like and the adjacent notch or the like in the length direction of the release liner (the distance between a slit and the adjacent slit) is preferably from 1 to 5 mm and more preferably from 2 to 4 mm. In the release liner, the angle (absolute value) between the slit and the width direction of the release liner is preferably from 0 to 10° and more preferably from 0 to 5°.

The double-sided pressure-sensitive adhesive tape including the release liner of the specific embodiment shown in FIG. 17 is preferably used for, for example, an adherend having the shape of circle, ellipse, or the like and an adherend having a complicated shape of straight and curved lines mixed. The double-sided pressure-sensitive adhesive tape can be attached with the tape bent at any position in the length direction because the slits are arranged in all area in the length direction in the release liner. On this account, at the time of the attachment to an adherend, even when the double-sided pressure-sensitive adhesive tape is not especially aligned with the length direction of the adherend, the tape can be attached to fit the adherend shape to be effective. Furthermore, the double-sided pressure-sensitive adhesive tape is especially effective on adherends having complicated shapes.

FIG. 18 shows the release liner having the slits in both edges in the width direction. The release liner in FIG. 18 includes an area 8 with the notches or the like (area with slits) and an area 9 without the notches or the like (area without slits) continuously and alternately (the slits are partly arranged). The length of the area 8 (area with slits) is preferably from 90 to 130 mm. Furthermore, the length of the area 9 (area without slits) is preferably from 500 to 540 mm. The length 6 of the notch or the like in the width direction (the length of the slit in one edge) is preferably from 3 to 7 mm and more preferably from 4 to 7 mm. Furthermore, the distance 10 between the leading ends of the slits opposing each other is preferably from 2 to 6 mm and more preferably from 2 to 5 mm. The full-width of the release liner is preferably from 10 to 20 mm and more preferably from 10 to 17 mm. The distance 5 between a notch or the like and the adjacent notch or the like in the length direction of the release liner (the distance between a slit and the adjacent slit) is preferably from 5 to 15 mm and more preferably from 7 to 12 mm. In the release liner, the angle (absolute value) between the slit and the width direction of the release liner is preferably from 0 to 10° and more preferably from 0 to 5°.

The double-sided pressure-sensitive adhesive tape including the release liner of the specific embodiment shown in FIG. 18 is preferably used for, for example, an adherend including a mixed shape having one or two straight shapes and a curved shape with certain curvature (namely, the shape including-a-straight line having a curve with certain curvature at any position, the shape including two straight lines connected with each other through a curved line with certain curvature, and the like). In the double-sided pressure-sensitive adhesive tape, when the slits are arranged in the release liner so as to correspond to the curvature or length of the curved line in an adherend, the double-sided pressure-sensitive adhesive tape without useless processing and capable of being bent to fit the adherend shape can be obtained.

The release liner having a notch or the like can employ known or common release liners and the like. Examples of the release liner include bases with a release layer, low adhesive bases including a
fluorine-containing polymer, and low adhesive bases including a non-polar polymer. Examples of the base with a release layer include plastic film and paper which are surface-treated with a release agent such as a silicone release agent, long-chain alkyl release agent, fluorine-containing release agent, and molybdenum sulfide release agent. Examples of the fluorine-containing polymer include polytetrafluoroethylenes, polychlorotrifluoroethylenes, polyvinyl fluorides, polyvinylidene fluorides, tetrafluoroethylene/hexafluoropropylene copolymers, and
chlorofluoroethylene/vinylidene fluoride copolymers. Examples of the non-polar polymer include olefinic resins such as polyethylenes and polypropylenes. Among them, from the viewpoint of curve following performance (the properties that the "wrinkle" or "floating" hardly occurs even when the tape is attached to a bent or curved part) by elongation, the release liner containing the olefinic resins (olefinic release liner) is preferred.

The olefinic release liner is not specifically limited as long as a release liner employs an olefinic film or sheet (polyolefinic film or sheet) containing an olefinic resin as an essential component. The olefinic release liner may include an olefinic film or sheet alone, or may be a laminate of an olefinic film or sheet and a resin film or sheet containing another resin such as a polyester resin or a laminate of an olefinic film or sheet and a paper base. The olefinic film or sheet and the laminate may have a releasably treated layer on the surface. The olefinic film or sheet may have a single layer structure or laminated structure.

A release agent constituting the releasably treated layer is not specifically limited and can be known or common release agents. Examples of the release agent usable herein include fluorine-containing release agents, long-chain alkyl release agents, fatty acid amide release agents, molybdenum sulfide release agents, and silica powders. These release agents can be used alone or in combination of two or more kinds.

The olefinic release liner is preferably used as the release liner because it has an adequate flexibility to prevent floating of the release liner (liner pop-off) compared to polyester release liners such as a release liner containing a polyester resin alone having relatively high rigidity. In particular, the olefinic release liner is effective when a bubble-containing pressure-sensitive adhesive layer is used as the pressure-sensitive adhesive layer. Furthermore, the olefinic release liner has a higher strength than that of the release liner including a paper base and especially has a high tear strength and-excellent tear resistance. Therefore, it is hardly broken during handling even when the notches or the like are arranged and is consequently advantageous. From the above viewpoints, the olefinic release liner is preferably a release liner using the olefinic film or sheet as the base (the thickest layer).

Examples of the olefinic resin (polyolefinic resin) constituting the olefinic release liner include, but are not specifically limited to, polyethylenes such as low-density polyethylenes, linear low-density polyethylenes, metallocene-catalyzed polyethylenes, medium-density polyethylenes, and high-density polyethylenes; polypropylenes; polybutenes such as poly(1-butene)s; poly(4-methyl-1-pentene)s; α-olefin copolymers such as copolymers of ethylene and an a-olefin having 3 to 10 carbon atoms (also referred to as "ethylene-α-olefin copolymers") and copolymers of propylene and an α-olefin having 4 to 10 carbon atoms (also referred to as "propylene-a-olefin copolymers"). Examples of the olefinic resin further include copolymers of ethylene and another component than α-olefin. Examples thereof include ethylene-unsaturated carboxylic acid copolymers such as ethylene-acrylic acid copolymers (EAAs), and ethylene-methacrylic acid copolymers (EMAAs); ionomers; ethylene-(meth)acrylate copolymers such as ethylene-methyl acrylate copolymers, ethylene-ethyl acrylate copolymers (EEAs), and ethylene-methyl methacrylate copolymers (EMMAs); ethylene-vinyl acetate copolymers (EVAs); and ethylene-vinyl alcohol copolymers. The olefinic resins can be used alone or in combination of two or more kinds.

In the ethylene-α-olefin copolymers (copolymers of ethylene- and an α-olefin having 3 to 10 carbon atoms), the α-olefin having 3 to 10 carbon atoms is preferably at least one a olefin (comonomer) selected from the group consisting of propylene, 1-butene, 1-hexene, 4-methyl-1-pentene, and 1-octene. Accordingly, examples of the ethylene-α-olefin copolymer include ethylene-propylene copolymers and ethylene-(1-butene) copolymers. In the propylene-α-olefin copolymer, the α-olefin having 4 to 10 carbon atoms is preferably at least one α-olefin (comonomer) selected from the group consisting of 1-butene, 1-hexene, 4-methyl-1-pentene, and 1-octene. Accordingly, examples of the propylene-α-olefin copolymer include propylene-(1-butene) copolymers.

Among the olefinic resins, polyethylenes, polypropylenes, and ethylene-α-olefin copolymers are preferable. Among them, polyethylenes are more preferable, and linear low-density polyethylenes, low-density polyethylenes, high-density polyethylenes, and any mixtures thereof are especially preferable. Thus, the olefinic release liner is preferably any of polyethylene release liners using polyethylene films or sheets containing a polyethylene as an essential component, and is more preferably any of polyethylene release liners using linear low-density polyethylene films or sheets, low-density polyethylene films or sheets, high-density polyethylene films or sheets, and films or sheets of arbitrary mixture of them.

The olefinic resins can be easily obtained by suitably selecting conditions for polymerization reaction and conditions for subsequent purification and fractionation according to known procedures. Commercial products can be used as the olefinic resins without further treatment.

A thickness of the release liner is not specifically limited, and, for example, preferably from 20 to 300 µm, more preferably from 30 to 250 µm, and yet more preferably from 40 to 200 µm.

### Additional Release Liner

The double-sided pressure-sensitive adhesive tape of the present invention may include an additional release liner other than the release liner having a notch or the like. The additional release liners are not specifically limited except that neither notches nor slits are arranged in edges in the width direction of the release liner, and can be known or common release liners and the like. Examples of the additional release liner include bases with a release layer, low adhesive bases including a fluorine-containing polymer, and low adhesive bases including a non-polar polymer. Examples of the base with a release layer include plastic film and paper which are surface-treated with a release agent such as a silicone release agent, long-chain alkyl release agent, fluorine-containing release agent, and molybdenum sulfide release agent. Examples of the fluorine-containing polymer include polytetrafluoroethylenes, polychlorotrifluoroethylenes, polyvinyl fluorides, polyvinylidene fluorides, tetrafluoroethylene/hexafluoropropylene copolymers, and chlorofluoroethylene/vinylidene fluoride copolymers. Examples of the non-polar polymer include olefinic resins such as polyethylenes and polypropylenes.

### Pressure-Sensitive Adhesive Body

The pressure-sensitive adhesive body in the double-sided pressure-sensitive adhesive tape of the present invention has adhesive faces as both surfaces (double-sided pressure-sensitive adhesive body). The pressure-sensitive adhesive body may be a "base-less pressure-sensitive adhesive body" having no base and a "base-supported pressure-sensitive adhesive body" having a base. Examples of the base-less pressure-sensitive adhesive body include a pressure-sensitive adhesive body having a pressure-sensitive adhesive layer alone. Examples of the base-supported pressure-sensitive adhesive body include a pressure-sensitive adhesive body having pressure-sensitive adhesive layers on both sides of a base. Among them, from the viewpoint of curve following performance, the base-less pressure-sensitive adhesive body is preferable, and the base-less pressure-sensitive adhesive body having a pressure-sensitive adhesive layer alone is especially preferable.

The pressure-sensitive adhesive layer in the pressure-sensitive adhesive body can be known or common pressure-sensitive adhesive layers generally used for pressure-sensitive adhesive tapes or sheets. Examples of the pressure-sensitive adhesive layer include pressure-sensitive adhesive layers having known or common pressure-sensitive adhesives (self-adhesive agents) such as acrylic pressure-sensitive adhesives, rubber pressure-sensitive adhesives, vinyl alkyl ether pressure-sensitive adhesives, silicone pressure-sensitive adhesives, polyester pressure-sensitive adhesives, polyamide pressure-sensitive adhesives, urethane pressure-sensitive adhesives, fluorine-containing pressure-sensitive adhesives, and epoxy pressure-sensitive adhesives. Among them, from the viewpoint of weather resistance, the acrylic pressure-sensitive adhesive layer including the acrylic pressure-sensitive adhesive is preferable. The adhesives can be used alone or in combination of two or more kinds. The pressure-sensitive adhesives can be in any form. For example, they can be emulsion pressure-sensitive adhesives, solvent pressure-sensitive adhesives, hot-melt pressure-sensitive adhesives, and pressure-sensitive adhesives which are curable with active energy rays, such as ultraviolet-curable pressure-sensitive adhesives.

Examples of the acrylic pressure-sensitive adhesive include pressure-sensitive adhesives containing an acrylic polymer described later as a base polymer. Examples of the rubber pressure-sensitive adhesive include pressure-sensitive adhesives containing, as a base polymer, rubber components such as natural rubber, styrene-isoprene-styrene block copolymers (SIS block copolymers), styrene-butadiene-styrene block copolymers (SBS block copolymers), styrene-ethylene/butylene-styrene block copolymers (SEBS block copolymers), styrene-butadiene rubbers, polybutadienes, polyisoprenes, polyisobutylenes, butyl rubbers, chloroprene rubbers, silicone rubbers, acrylonitrile-butadiene rubbers, and ethylene-propylene terpolymers.

The pressure-sensitive adhesive body in the double-sided pressure-sensitive adhesive tape of the present invention preferably includes at least one pressure-sensitive adhesive layer containing bubbles and/or hollow microspheres. A "pressure-sensitive adhesive layer containing bubbles and/or hollow microspheres" is also generically referred to as a "bubble-containiring pressure-sensitive adhesive layer". Furthermore, a "pressure-sensitive adhesive layer other than the bubble-containing pressure-sensitive adhesive layer" is also referred to as an "additional pressure-sensitive adhesive layer". Examples of the pressure-sensitive adhesive body including the bubble-containing pressure-sensitive adhesive layer include base-less pressure-sensitive adhesive bodies including the bubble-containing pressure-sensitive adhesive layer alone or including the bubble-containing pressure-sensitive adhesive layer and an additional pressure-sensitive adhesive layer, and base-supported pressure-sensitive adhesive bodies including on at least one side of the base (base layer) the bubble-containing pressure-sensitive adhesive layer and on the other side the bubble-containing pressure-sensitive adhesive layer or an additional pressure-sensitive adhesive layer.

Specifically, the pressure-sensitive adhesive body in the double-sided pressure-sensitive adhesive tape of the present invention is preferably a pressure-sensitive adhesive body including at least one bubble-containing pressure-sensitive adhesive layer having an acrylic pressure-sensitive adhesive (bubble-containing acrylic pressure-sensitive adhesive layer), and more preferably a base-less pressure-sensitive adhesive body including a bubble-containing acrylic pressure-sensitive adhesive layer alone.

The bubble-containing pressure-sensitive adhesive layer is a pressure-sensitive adhesive layer containing bubbles and/or hollow microspheres. The pressure-sensitive adhesive layer is made from the known or common pressure-sensitive adhesives described above (preferably, acrylic pressure-sensitive adhesives). When the bubble-containing pressure-sensitive adhesive layer is the bubble-containing acrylic pressure-sensitive adhesive layer, the bubble-containing pressure-sensitive adhesive layer contains an acrylic polymer as a base polymer. The content of the base polymer (acrylic polymer) in the bubble-containing pressure-sensitive adhesive layer is preferably 60% by weight or more, and more preferably from 80 to 99% by weight, based on the total weight of the bubble-containing pressure-sensitive adhesive layer.

Preferable main monomer components constituting the acrylic polymer are alkyl (meth)acrylates having a linear or branched alkyl group (hereinafter, also simply referred to as "alkyl (meth)acrylates"). Examples of the alkyl (meth)acrylate include alkyl (meth)acrylates having an alkyl group with 1 to 20 carbon atoms, such as methyl (meth)acrylate, ethyl (meth)acrylate, propyl (meth)acrylate, isopropyl (meth)acrylate, butyl (meth)acrylate, isobutyl (meth)acrylate, s-butyl (meth)acrylate, t-butyl (meth)acrylate, pentyl (meth)acrylate, isopentyl (meth)acrylate, hexyl (meth)acrylate, heptyl (meth)acrylate, octyl (meth)acrylate, 2-ethylhexyl (meth)acrylate, isooctyl (meth)acrylate, nonyl (meth)acrylate, isononyl (meth)acrylate, decyl (meth)acrylate, isodecyl (meth)acrylate, undecyl (meth)acrylate, dodecyl (meth)acrylate, tridecyl (meth)acrylate, tetradecyl (meth)acrylate, pentadecyl (meth)acrylate, hexadecyl (meth)acrylate, heptadecyl (meth)acrylate, octadecyl (meth)acrylate, nonadecyl (meth)acrylate, and eicosyl (meth)acrylate. Among them, alkyl (meth)acrylates having an alkyl group with 2 to 14 carbon atoms are preferable, and alkyl (meth)-acrylates having an alkyl group with 2 to 10 carbon atoms are more preferable. Especially preferred is 2-ethylhexyl acrylate. Here, the term "(meth)acrylate" means "acrylate" and/or "methacrylate", and other terms are alike.

The alkyl (meth)acrylates can be used alone or in combination of two or more kinds. Alkyl (meth)acrylates are used as a major monomer component (main monomer component) of the acrylic polymers, and the proportion (content in monomer components) of alkyl (meth)acrylate is preferably 60% by weight or more (for example, from 60 to 99% by weight), and more preferably 80% by weight or more, based on the total amount of monomer components included in (constituting) the acrylic polymer.

The acrylic polymer may further include as monomer components various copolymerizable monomers such as polar group-containing monomers and multifunctional monomers. When such a copolymerizable monomer is used as a monomer component, for example, the adhesive strength of the pressure-sensitive adhesive layer to an adherend is improved or the cohesive power is enhanced. The copolymerizable monomers can be used alone or in combination in two or more kinds.

Examples of the polar group-containing monomer include carboxyl group-containing monomers such as (meth)acrylic acid, itaconic acid, maleic acid, fumaric acid, crotonic acid, and isocrotonic acid, and anhydrides thereof such as maleic anhydride; hydroxyalkyl (meth)acrylates such as hydroxylethyl (meth)acrylate, hydroxypropyl (meth)acrylate, and hydroxybutyl (meth)acrylate, as well as hydroxyl group-containing monomers such as vinyl alcohol and allyl alcohol; amide group-containing monomers such as (meth)acrylamide, N,N-dimethyl (meth)acrylamide, N-methylol (meth)acrylamide, N-methoxymethyl (meth)acrylamide, and N-butoxymethyl (meth)acrylamide; amino group-containing monomers such as aminoethyl (meth)acrylate, dimethylaminoethyl (meth)acrylate, and t-butylaminoethyl (meth)acrylate; glycidyl group-containing monomers such as glycidyl (meth)acrylate and methylglycidyl (meth)acrylate; cyano group-containing monomers such as acrylonitrile and methacrylonitrile; heterocyclic ring-containing vinyl monomers such as N-vinyl-2-pyrrolidone, (meth)acryloyl morpholine as well as N-vinylpyridine, N-vinylpiperidone, N-vinylpyrimidine, N-vinylpiperazine, N-vinylpyrrole, N-vinylimidazole, and N-vinytoxazole; alkoxyalkyl (meth)acrylate monomers such as methoxyethyl (meth)acrylate and ethoxyethyl (meth)acrylate; sulfonate group-containing monomers such as sodium vinylsulfonate; phosphate group-containing monomers such as 2-hydroxylethyl acryloyl phosphate; imide group-containing monomers such as cyclohexyl maleimide and isopropyl maleimide; and isocyanate group-containing monomers such as 2-methacryloyloxyethyl isocyanate. Among the polar group-containing monomer, the carboxyl group-containing monomers and anhydrides thereof are preferable, and acrylic acid is especially preferable.

The monomer proportion of the polar group-containing monomer (content in monomer components) is 30% by weight or less (for example from 1 to 30% by weight), and preferably from 3 to 20% by weight, based on the total amount of monomer components included in the acrylic polymer. When the monomer proportion of the polar group-containing monomer is more than 30% by weight, for example, the pressure-sensitive adhesive layer may have an excessively high cohesive power to reduce tackiness. When the monomer proportion of the polar group-containing monomer is excessively low (for example, less than 1% by weight), the monomers may not exert the effect of copolymerization of these monomers.

Examples of the multifunctional monomer include hexanediol di(meth)acrylate, butanediol di(meth)acrylate, (poly)ethylene glycol di(meth)acrylate, (poly)propylene glycol di(meth)acrylate, neopentyl glycol di(meth)acrylate, pentaerythritol di(meth)acrylate, pentaerythritol tri(meth)acrylate, dipentaerythritol hexa(meth)acrylate, trimethylolpropane tri(meth)acrylate, tetramethylolmethane tri(meth)acrylate, allyl (meth)acrylate, vinyl (meth)acrylate, divinylbenzene, epoxy acrylate, polyester acrylate, and urethane acrylate.

The monomer proportion of the multifunctional monomer (content in monomer components) is 2% by weight or less (for example, from 0 to 2% by weight), and preferably from 0 to 1% by weight, based on the total amount of monomer components included in the acrylic polymer. When the monomer proportion of the multifunctional monomers is more than 2% by weight, for example, the pressure-sensitive adhesive layer may have an excessively high cohesive power to reduce tackiness.

Examples of copolymerizable monomer other than the polar group-containing monomer and multifunctional monomer include (meth)acrylic acid esters other than the above alkyl (meth)acrylates, polar group-containing monomers, and multifunctional monomers, including (meth)acrylic acid esters having an alicyclic hydrocarbon group such as cyclopentyl (meth)acrylate, cyclohexyl (meth)acrylate, and isobornyl (meth)acrylate, and (meth)acrylic acid esters having an aromatic hydrocarbon group such as phenyl (meth)acrylate; vinyl esters such as vinyl acetate and vinyl propionate; aromatic vinyl compounds such as styrene and vinyltoluene; olefins or dienes such as ethylene, butadiene, isoprene, and isobutylene; vinyl ethers such as vinyl alkyl ethers; and vinyl chloride.

The acrylic polymer can be prepared using a polymerization reaction (curing reaction) with heat or active energy rays using a polymerization initiator such as a thermal polymerization initiator or photoinitiator (photopolymerization initiator). For example, by polymerizing (curing) a pressure-sensitive adhesive composition containing bubbles ("pressure-sensitive adhesive composition" includes "composition included in (constituting) the pressure-sensitive adhesive layer") with heat or active energy rays, a bubble-containing pressure-sensitive adhesive layer structurally stably containing bubbles can be easily formed. The polymerization initiator used herein can be any known or common polymerization initiators such as those described in Japanese Unexamined Patent Application Publication (JP-A) No. 2008-12798, JP-A No. 2006-022189, and JP-A No. 2005-179561. Among such polymerization initiators, photoinitiators are preferably employed, typically because the polymerization using the photoinitiator can be carried out in a shorter time. The photoinitiators can be used alone or in combination of two or more kinds.

Examples of the photoinitiator include, but are not limited to, benzoin ether photoinitiators, acetophenone photoinitiators, α-ketol photoinitiators, aromatic sulfonyl chloride photoinitiators, photo-activatable oxime photoinitiators, benzoin photoinitiators, benzyl photoinitiators, benzophenone photoinitiators, ketal photoinitiators, and thioxanthone photoinitiators. The amount of the photoinitiator is not specifically limited, but, for example, preferably from 0.01 to 5 parts by weight, and more preferably from 0.05 to 3 parts by weight, with respect to 100 parts by weight of the total monomer components included in the acrylic polymer.

Examples of the active energy ray irradiating for the activation of the photoinitiator include ionizing radiations such as α rays, ß rays, Y rays, neutron beams, and electron beams; and ultraviolet rays. Among them, the ultraviolet rays are especially preferable. Furthermore, the irradiation energy, irradiation duration, irradiation procedure, and other conditions for the active energy rays are not specifically limited as long as the photoinitiator is activated to react monomer components.

Examples of the thermal polymerization initiator include azo polymerization initiators, peroxide polymerization initiators, and redox polymerization initiators. The amount of the thermal polymerization initiator is not specifically limited and can be set within a range capable of initiating the polymerization.

The bubble-containing pressure-sensitive adhesive layer in the double-sided pressure-sensitive adhesive tape of the present invention contains bubbles and/or hollow microspheres. The presence of the bubbles and/or hollow microspheres, for example, soften the pressure-sensitive adhesive layer to improve the stretch properties, and consequently, the pressure-sensitive adhesive tape is hardly removed even when the tape is deformed in the width direction. On this account, the bubble-containing pressure-sensitive adhesive layer is preferable as the pressure-sensitive adhesive layer of the double-sided pressure-sensitive adhesive tape of the present invention for attaching to an adherend with the tape bent in the width direction. Examples of such a pressure-sensitive adhesive layer containing bubbles and/or hollow microspheres usable herein include bubble-containing pressure-sensitive adhesive layers and bubble-containing self-adhesive layers described in JP-A No. 2008-12798, JP-A No. 2006-022189, and JP-A No. 2005-179561.

The bubbles are basically preferably closed cells, but they may be a mixture of closed cells and open cells. Such bubbles or cells generally have spherical shapes, but they may have deformed or irregular spherical shapes. The average cell size (diameter) of the bubbles is not specifically limited, and, for example, can be selected from a range from 1 to 1000 µm, preferably from 10 to 500 µm, and more preferably from 30 to 300 µm.

A gaseous component contained in the bubbles (gaseous component constituting bubbles; also referred to as "bubble constituting gas") is not specifically limited and can be any gaseous component including inert gas such as nitrogen, carbon dioxide, or argon, as well as air. When a reaction such as polymerization reaction is carried out after the incorporation of a bubble constituting gas, it is important that the bubble-constituting gas should be one not inhibiting the reaction. Preferable bubble constituting gas is nitrogen because it does not inhibit the reaction and is available inexpensively.

The amount of bubbles capable of being contained in the bubble-containing pressure-sensitive adhesive layer is not specifically limited and can be set within a range not adversely affecting properties such as adhesive properties. For example, from the viewpoint of the adhesive properties, the amount of bubbles in terms of its lower limit is preferably 10% by volume or more , more preferably 11% by volume or more, and yet more preferably 12% by volume or more; and from the viewpoint of cohesive power, the amount of bubbles in terms of its upper limit is preferably 50% by volume or less, more preferably 40% by volume or less, and yet more preferably 30% by volume or less, each based on the total volume of the bubble-containing pressure-sensitive adhesive layer.

The hollow microspheres may be either hollow inorganic microspheres or hollow organic microspheres. Specific examples of the hollow inorganic microspheres include hollow balloons made of glass such as hollow glass balloons; hollow balloons made of metal compounds such as hollow alumina balloons; and hollow balloons made of ceramics such as hollow ceramic balloons. Specific examples of the hollow organic microspheres include hollow balloons made of resins such as hollow acrylic balloons and hollow poly (vinylidene chloride) balloons. Among them, the hollow glass balloons are preferable.

The particle diameter (average particle diameter) of the hollow microspheres is not specifically limited, but for example, preferably from 1 to 500 µm, more preferably from 5 to 200 µm, and furthermore preferably from 10 to 100 µm.

The specific gravity of the hollow microspheres is not specifically limited, but for example, preferably from 0.1 to 0.8 g/cm³, and more preferably from 0.12 to 0.5 g/cm³. When the specific gravity of the hollow microspheres is less than 0.1 g/cm³, the hollow microspheres may be difficult to disperse in the pressure-sensitive adhesive composition uniformly because of the high uplift during mixing. In contrast, when the specific gravity of the hollow microspheres is more than 0.8 g/cm³, the product becomes expensive to increase the cost.

The amount of the hollow microspheres is not specifically limited, and for example, preferably from 5 to 50% by volume, more preferably from 10 to 50% by volume, and yet more preferably from 15 to 40% by volume, based on the total volume of the bubble-containing pressure-sensitive adhesive layer. When the amount of the hollow microspheres is less than 5% by volume, the bubble-containing pressure-sensitive adhesive layer has insufficient effect by the addition of the hollow microspheres. In contrast, when the amount of the hollow microspheres is more than 50% by volume, the adhesive strength of the pressure-sensitive adhesive layer may be reduced.

The bubble-containing pressure-sensitive adhesive layer may contain a surfactant in order to reduce the adhesion and frictional drag between the hollow microspheres and base polymer and in order to contain the bubbles satisfactorily and stably. Examples of the surfactant usable herein include fluorine-containing surfactants, silicone surfactants, nonionic surfactants, and ionic surfactants. Among them, the fluorine-containing surfactants are especially preferable because the bubbles are mixed satisfactorily and the coalescence of bubbles is inhibited. Among the fluorine-containing surfactants, fluorine-containing surfactants having an oxy-C₂₋₃ alkylene group and fluorinated hydrocarbon group in the molecule are more preferable. Among them, nonionic surfactants are yet more preferred from the viewpoint of the dispersibility with respect to the base polymer. The fluorine-containing surfactants may be used alone or in combination of two or more kinds. Preferable fluorine-containing surfactants are described in JP-A No. 2008-12798 and JP-A No. 2006-022189.

As the fluorine-containing surfactant, commercially available products can be used, and preferred examples of the commercial product include products supplied under the trade names " FTERGENT 251" and "FTX-218" by Neos Company Ltd.; products supplied under the trade names "MEGAFACE F-477" and " MEGAFACE F-470" by DIC Corporation; products supplied under the trade names "Surflon S-381, S-383, S-393, KH-20, and KH-40" by AGC Seimi Chemicals Co., Ltd.; products supplied under the trade names "EFTOP EF-352 and EF-801" by JEMCO Inc.; and a product supplied under the trade name "UNIDYNE TG-656" by Daikin Industries, ltd.

The bubble-containing pressure-sensitive adhesive layer may contain suitable additives depending on the application of the double-sided pressure-sensitive adhesive tape. Such suitable additives are selected corresponding to the type of the pressure-sensitive adhesives, and examples of the additive include crosslinking agents such as polyisocyanate crosslinking agents, silicone crosslinking agents, epoxy crosslinking agents, and alkyl-etherified melamine crosslinking agents; tackifiers which are solid, semisolid, or liquid at an ambient temperature and made from rosin derivative resins, polyterpene resins, petroleum resins, and oil-soluble phenol resins; plasticizers; fillers; age inhibitors; antioxidants; colorants such as dyes and pigments.

The thickness of the bubble-containing pressure-sensitive adhesive layer is not specifically limited, but preferably from 1 µm to 5 mm, more preferably from 100 µm to 4 mm, and yet more preferably from 200 µm to 3 mm. The bubble-containing pressure-sensitive adhesive layer may have either a single-layer structure or multilayer structure.

A composition for constituting the bubble-containing pressure-sensitive adhesive layer (pressure-sensitive adhesive composition) can be prepared according to a known procedure, for example, by mixing monomer components (for example, a main monomer component and copolymerizable monomers) constituting the base polymer (for example, an acrylic polymer in the case of the bubble-containing acrylic pressure-sensitive adhesive layer), a polymerization initiator, and various additives. Where necessary typically for the viscosity control, the monomer components may be partially polymerized. Specifically, the pressure-sensitive adhesive composition may be prepared, for example, according to the following processes. (i) Monomer components for constituting the base polymer are mixed with a polymerization initiator to give a monomer mixture, and (ii) the monomer mixture is polymerized under a suitable condition for the type of the polymerization initiator (for example, polymerized under ultraviolet irradiation) to give a composition (syrup) in which only part of the monomer components are polymerized. Next, (iii) if required, the obtained syrup is combined with hollow microspheres, surfactants, and other additives. Then, when the pressure-sensitive adhesive layer contains bubbles, (iv) bubbles are incorporated into the mixture obtained in (iii) and mixed. The preparation method of the pressure-sensitive adhesive composition is not limited to this process. Here, the "syrup" means a "syrup-like composition".

Bubbles are preferably incorporated as the last component into the pressure-sensitive adhesive composition as in the above preparation method because the bubbles are stably contained. Furthermore, the mixture before the incorporation of bubbles (for example, the mixture obtained in (iii)) preferably has a relatively high viscosity because the bubbles are stably incorporated. The viscosity of the mixture before the incorporation of bubbles is not specifically limited, but for example, preferably from 5 to 50 Pa•s, and more preferably from 10 to 40 Pa•s (BH type viscometer, rotor: No.5 rotor, rotation speed: 10 rpm, measurement temperature: 30°C). When the viscosity is less than 5 Pa•s, the incorporated bubbles may immediately coalesce to escape from the system due to an excessively low viscosity. In contrast, when the viscosity is more than 50 Pa•s, the pressure-sensitive adhesive layer may be difficult to be formed by coating due to an excessively high viscosity. Here, the viscosity can be adjusted, for example, by blending various polymer components such as acrylic rubbers and thickening additives, or by partially polymerizing monomer components for constituting the base polymer.

The method for incorporating bubbles is not specifically limited and a known method for incorporating bubbles can be employed. Examples of the device for incorporating bubbles include one having a stator and a rotor opposing the stator. The stator includes a disc having a through-hole at a center part and having multiple fine teeth arranged on it. The rotor includes a disc having multiple fine teeth arranged on it similar to the stator. The mixture to incorporate bubbles to is introduced between the teeth on the stator and the teeth on the rotor in the device, and a gaseous component for constituting bubbles (bubble constituting gas) is introduced through the through-hole with the rotor rotated at high speed to obtain the pressure-sensitive adhesive composition containing finely dispersed bubbles.

In order to inhibit or prevent the bubble coalescence, the steps from the incorporation of bubbles to the formation of the bubble-containing pressure-sensitive adhesive layer is preferably carried out in a continuous series of steps. That is, it is preferable that the bubbles are incorporated to prepare the pressure-sensitive adhesive composition as mentioned above, and subsequently, the prepared pressure-sensitive adhesive composition is used to form the bubble-containing pressure-sensitive adhesive layer.

The method for forming the bubble-containing pressure-sensitive adhesive layer is not specifically limited. For example, the pressure-sensitive adhesive composition is coated on a suitable carrier such as a release liner or base to form a pressure-sensitive adhesive composition layer, and the layer is, as necessary, cured (for example, thermally cured or cured with an active energy ray) or dried to obtain the bubble-containing pressure-sensitive adhesive layer. Among them, the curing with an active energy ray is preferable.

When the pressure-sensitive adhesive body in the double-sided pressure-sensitive adhesive tape of the present invention includes a base (base layer), examples of the base include suitable thin articles including paper bases such as paper; fibrous bases such as fabrics, nonwoven fabrics, and nets; metal bases such as metal foils and metal plates; plastic bases such as plastic films and sheets; rubber bases such as rubber sheets; foams such as foamed sheets; and laminates thereof (specifically, laminates of a plastic base and another base and laminates of plastic films (or sheets)). Examples of material for such plastic films and sheets include olefinic resins containing, as a monomer component, an α-olefin such as polyethylenes (PEs), polypropylenes (PPs), ethylene-propylene copolymers, and ethylene-vinyl acetate copolymers (EVAs); polyester resins such as polyethylene terephthalates (PETs), polyethylene naphthalates (PENs), and polybutylene terephthalates (PBTs); polyvinyl chlorides (PVCs); vinyl acetate resins; polyphenylene sulfides (PPSs); amide resins such as polyamides (nylons) and wholly aromatic polyamides (aramids); polyimide resins; and polyether ether ketones (PEEKs). These materials can be used alone or in combination of two or more kinds. Here, the "base" is a part which is attached to an adherend in combination with the pressure-sensitive adhesive layer when the double-sided pressure-sensitive adhesive tape is used (attached to the adherend). The release liner (separator), which is released when the double-sided pressure-sensitive adhesive tape is used (at the time of attaching), is not included in the "base".

The thickness of the base can be suitably selected depending on, for example, the strength or flexibility required for the double-sided pressure-sensitive adhesive tape and the intended application of the double-sided pressure-sensitive adhesive tape. The thickness is not specifically limited, and for example, generally 1000 µm or less (for example, from about 1 to 1000 µm), preferably from about 1 to 500 µm, and more preferably from about 3 to 300 µm. The base may have a single-layer structure or laminated structure. In order to increase the adhesion with the pressure-sensitive adhesive layer or the like, the base surface may be applied with a common surface treatment, for example, an oxidation treatment according to a chemical or physical method such as corona treatment, chromate treatment, exposure to ozone, exposure to flame, exposure to high-voltage electric shock, or treatment with ionizing radiation, as well as a coating treatment with a primer or release agent.

The thickness of the pressure-sensitive adhesive body in the double-sided pressure-sensitive adhesive tape of the present invention is not specifically limited, but preferably from 1 µm to 5 mm, more preferably from 100 µm to 4 mm, and yet more preferably from 200 µm to 3 mm from the viewpoint of curve following performance.

The length (full-length) of the pressure-sensitive adhesive body in the double-sided pressure-sensitive adhesive tape of the present invention varies depending on the application of the double-sided pressure-sensitive adhesive tape and the like, is not specifically limited, but preferably from 10 to 1000 m, and more preferably from 20 to 800 m. Furthermore, the width (full-width) of the pressure-sensitive adhesive body varies depending on the application of the double-sided pressure-sensitive adhesive tape and the like, is not specifically limited, but preferably from 2 to 100 mm, more preferably from 2 to 50 mm, yet more preferably from 2 to 30 mm, and most preferably from 3 to 20 mm. The full-length and full-width of the pressure-sensitive adhesive body are often the same or substantially the same as the full-length and full-width of the double-sided pressure-sensitive adhesive tape or release liner having a notch or the like, respectively.

Double-Sided Pressure-Sensitive Adhesive Tape and Method for Attaching The Tape

The double-sided pressure-sensitive adhesive tape of the present invention includes, on at least one adhesive face of the pressure-sensitive adhesive body, the release liner having a notch or the like. Specifically, for example, the double-sided pressure-sensitive adhesive tape preferably has the tape structure of a release liner having a notch or the like/pressure-sensitive adhesive body; or a release liner having a notch or the like/pressure-sensitive adhesive body/additional release liner. More preferable tape structures are a release liner having a notch or the like/base-less pressure-sensitive adhesive body including a bubble-containing acrylic pressure-sensitive adhesive layer alone; and a release liner having a notch or the like/base-less pressure-sensitive adhesive body including a bubble-containing acrylic pressure-sensitive adhesive layer alone/additional release liner.

The method for producing the double-sided pressure-sensitive adhesive tape of the present invention is not specifically limited. For example, a release liner is previously slit or punched to prepare the release liner having a notch or the like, and then the release liner having a notch or the like is laminated on an adhesive face of a pressure-sensitive adhesive body (for example, bubble-containing acrylic pressure-sensitive adhesive layer) which is laminated on an additional release liner to manufacture the double-sided pressure-sensitive adhesive tape; or a laminate of a release liner without notches or the like/pressure-sensitive adhesive body/release liner without notches or the like is slit or punched from one of the sides of the laminate to arrange the notch or the like in one of the release liners, in one of the release liners and the pressure-sensitive adhesive body, or in all layers constituting the double-sided pressure-sensitive adhesive tape. The processing machine for making the notch or the like is not specifically limited, but examples of the processing machine include a rotary cutter and Thomson punching machine.

In the double-sided pressure-sensitive adhesive tape of the present invention, because at least one release liner has a notch or the like, when one of the adhesive faces of the double-sided pressure-sensitive adhesive tape is attached to an adherend with the release liner having a notch or the like held on the other adhesive face, even when the double-sided pressure-sensitive adhesive tape is attached with the tape curved in the tape width direction (or bent in the width direction), the "wrinkle" in the curved part (or bent part) in the release liner or the "floating" of the release liner from the pressure-sensitive adhesive body can be inhibited. On this account, the double-sided pressure-sensitive adhesive tape is preferably used for an adherend having a curved part (bent part) (especially a long adherend).

Namely, the double-sided pressure-sensitive adhesive tape of the present invention can be attached to an adherend having a bend and/or curve with the release liner (release liner having a notch or the like) held on one of the sides of the pressure-sensitive adhesive body and with the tape bent in the width direction. In the double-sided pressure-sensitive adhesive tape, when the release liner having a notch or the like has the notch or the like only in one of the edges in the width direction (in one of the side edges), it is preferable that the double-sided pressure-sensitive adhesive tape is attached with the tape edge in the width direction having the notches or the like (the side edge having notches or the like) bent inward.

Generally, when the double-sided pressure-sensitive adhesive tape is attached to an adherend with the tape bent in the width direction, the double-sided pressure-sensitive adhesive tape is compressed inside the curved part (or bent part), and in contrast, the double-sided pressure-sensitive adhesive tape is stretched outside the curved part. At this time, when the double-sided pressure-sensitive adhesive tape is attached to an adherend with the release liner held on the adhesive face opposing the adherend, a wrinkle in the curved part or floating of the release liner from the pressure-sensitive adhesive body is often observed because the release liner is relatively hard and has low stretch properties. These phenomena are remarkably observed inside the curved part where the tape is compressed especially. On the other hand, in the double-sided pressure-sensitive adhesive tape of the present invention, because the release liner includes a notch or the like (notch and/or slit), the notch and the like reduces the deformation effect due to the compress or stretch (absorbs the deformation) to inhibit the wrinkle or floating of the release liner. Further specifically, inside the curved part, the notch becomes narrower or the release liner is overlapped at the slit to reduce the deformation effect due to the compression. Furthermore, outside the curved part, the notch or slit widens to reduce the deformation effect due to the stretch. The pressure-sensitive adhesive body is softer and readily stretched in comparison with the release liner (in particular, a base-less pressure-sensitive adhesive body including a bubble-containing pressure-sensitive adhesive layer alone is readily stretched), and thus, the pressure-sensitive adhesive body readily follows dimensional changes such as the compression in a curved part even when the notch or the like is not arranged.

FIG. 19 is a schematic diagram (plan view) typically showing a deformation of the notches in a curved part of the double-sided pressure-sensitive adhesive tape of the present invention (with the release liner having notches held) when the tape is curved in the tape width direction. In FIG. 19, a reference numeral 14 shows the curved part of the release liner, 11 shows a notch in a part other than the curved part, 12 shows notches inside the curved part, and 13 shows notches outside the curved part. As mentioned above, in the curved part 14 of the release liner, each the notch 12 inside the curved part has a narrower width than that of the notch 11 in a part other than the curved part (a smaller notch area), whereby the deformation effect on the release liner due to the compression is reduced. Furthermore, each the notch 13 outside the curved part has a wider width than that of the notch 11 in a part other than the curved part (a larger notch area), whereby the deformation effect on the release liner due to the stretch is reduced. The release liner with the slit has the same advantage as in that with the notch, except that the release liner is overlapped at the slit inside the curved part.

As mentioned above, the double-sided pressure-sensitive adhesive tape of the present invention can be attached to an adherend having a bend and/or curve with the tape bent in the width direction. On this account, the double-sided pressure-sensitive adhesive tape does not require the following process: a double-sided pressure-sensitive adhesive tape larger than an adherend is attached and then an excess part lying from the adherend is cut off; or the tape is punched into a shape corresponding to the adherend shape. Accordingly, the double-sided pressure-sensitive adhesive tape has no useless part, and attaching is simplified. Consequently, the double-sided pressure-sensitive adhesive tape has advantages in cost and production efficiency.

The adherend of the double-sided pressure-sensitive adhesive tape of the present invention is not specifically limited. The adherend preferably has a bend and/or curve because the double-sided pressure-sensitive adhesive tape is needed to be attached with the tape curved or bent in the width direction, and thus the effect of the invention is remarkably exerted. Among them, a long-shaped adherend having a bend and/or curve is specifically preferable because of the especially remarkable effect of the invention. The adherend is not specifically limited as long as having the shape described above, but examples of the adherend include workpieces and reinforcing materials for producing automobiles, building materials, and household electric appliances.

The release liner having a notch or the like in the double-sided pressure-sensitive adhesive tape of the present invention can be used for single-sided pressure-sensitive adhesive tapes as well as double-sided pressure-sensitive adhesive tapes.

### Examples

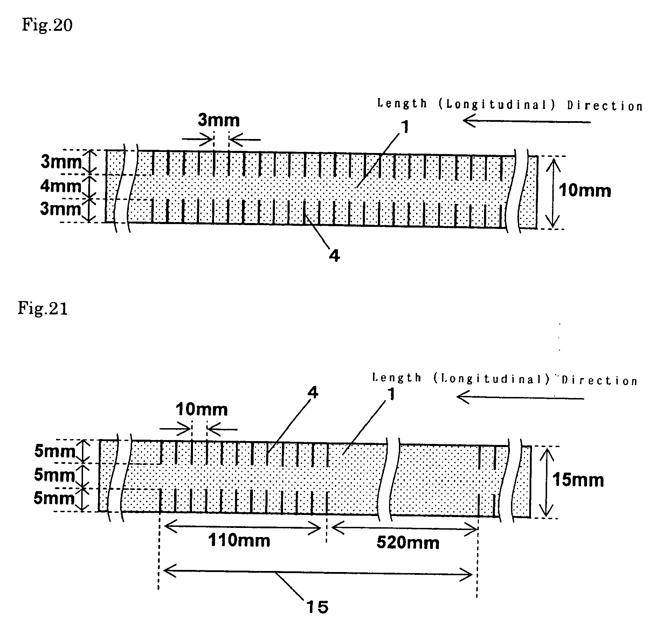

The present invention will be illustrated in further detail with reference to several examples and comparative examples below. If should be noted, however, these examples are never construed to limit the scope of the present invention. The arrangements of slits in the release liners of Examples 1 and 2 are shown in FIGS. 20 and 21, respectively.

Properties of the high-adhesion acrylic foam tape (supplied by Nitto Denko Corporation under the trade name "HYPERJOINT A4012") ("HYPERJOINT" is the registered trademark of Nitto Denko Corporation) used in Examples and Comparative Examples are as shown below. Tape Structure: Bubble-containing acrylic pressure-sensitive adhesive layer/polyethylene release liner (a double-sided pressure-sensitive adhesive tape having a base-less pressure-sensitive adhesive body) Thickness of Pressure-Sensitive Adhesive Layer: 1.2 mm
Thickness of Release Liner: 150 µm
Width of Adhesive Tape: 10 mm (Example 1, Comparative Example 1), 15 mm (Example 2, Comparative Example 2)
Length of Adhesive Tape: 20 m

### Example 1

In the release liner of the high-adhesion acrylic foam tape (trade name: "HYPERJOINT A4012"), slits were arranged using a rotary cutter as shown in FIG. 20. The slits were arranged in both edges in the width direction of the release liner in all area in the length direction (the slits were continuously arranged in the length direction of the release liner).

Dimensions and the like of the slits arranged in the release liner are shown below.
Width of Adhesive Tape (Width of Release Liner): 10 mm
Length of Slit in One Edge: 3 mm (the same length in both edges) Distance between Leading Ends of Slits Opposing Each Other^{:} 4 mm Distance between Slits Adjacent to Each Other in Length Direction: 3 mm
Angle between Slit and Width Direction of Release Liner: 0°

### Comparative Example 1

The same high-adhesion acrylic foam tape (trade name "HYPERJOINT A4012") as that in Example 1 was used except that the slits were not arranged.

### Evaluation

Each of the double-sided pressure-sensitive adhesive tapes of Example 1 and Comparative Example 1 (a length of 200 mm) was attached to a stainless plate with the release liner held on the adhesive face opposing the attaching adhesive face so as to fit the arc with a curvature radius of 50 mm. After 30 minutes of the attachment, each attaching state was observed.

As a result, in the double-sided pressure-sensitive adhesive tape of Example 1 (release liner had slits), "floating" was not observed in the release liner. Thereafter, the release liner was not broken during releasing the release liner. In contrast, in the double-sided pressure-sensitive adhesive tape of Comparative Example 1 (release liner had no slit), "floating" with a height of about 3 mm was observed in the release liner.

### Example 2

In the release liner of the high-adhesion acrylic foam tape (trade name: "HYPERJOINT A4012"), slits were arranged using a rotary cutter as shown in FIG. 21. The slits were arranged in both the edges in the width direction of the release liner so as to continuously repeat the area with the slits and the area without the slits alternately in the length direction of the release liner.

Dimensions and the like of the slits arranged in the release liner are shown below.
Width of Adhesive Tape (width of release liner): 15 mm
Length of Slit in One Edge: 5 mm (the same length in both edges) Distance between Leading Ends of Slits Opposing Each Other: 5 mm Distance between Slits Adjacent to Each Other in Length Direction: 10 mm
Angle between Slit and Width Direction of Release Liner: 0°
Length of Area with Slits: 110 mm
Length of Area without Slits: 520 m-m

### Comparative Example 2

The same high-adhesion acrylic foam tape (trade name "HYPERJOINT A4012") as that in Example 2 was used except that the slits were not arranged.

### Evaluation

Each of the double-sided pressure-sensitive adhesive tapes of Example 2 and Comparative Example 2 (a length of 630 mm) was attached to a stainless plate with the release liner held on the adhesive face opposing the attaching adhesive face so as to fit the shape having a straight line with a length of 520 mm and having an arc with a curvature radius of 80 mm (a straight line with a length of 520 mm is curved at its leading end to form an arc with a curvature radius of 80 mm). Here, as for the double-sided pressure-sensitive adhesive tape of Example 2, an area from an end of the area with the slits on the release liner in the length direction to the end of the adjacent area without the slits in the length direction was used as the sample for evaluation (see FIG. 21, the part 15 in FIG. 21 is the sample for evaluation), and the tape was attached so that the area with the slits in the release liner would correspond to the arc (curved part). After 30 minutes of the attachment, each attaching state was observed.

As a result, in the double-sided pressure-sensitive adhesive tape of Example 2 (release liner had slits), "floating" was not observed in the release liner. Thereafter, the release liner was not broken during releasing the release liner. In contrast, in the double-sided pressure-sensitive adhesive tape of Comparative Example 2 (release liner had no slit), "floating" with a height of about 4 mm was observed in the release liner.

## Claims

1. A double-sided pressure-sensitive adhesive tape comprising:
a pressure-sensitive adhesive body; and
a release liner arranged on at least one side of the pressure-sensitive adhesive body,
wherein the release liner includes a notch and/or slit in at least one edge in a width direction of the release liner.

2. The double-sided pressure-sensitive adhesive tape according to Claim 1, wherein the release liner includes two or more notches and/or slits.

3. The double-sided pressure-sensitive adhesive tape according to Claim 1 or 2, wherein the notch and/or slit does not cut across a full-width of the release liner.

4. The double-sided pressure-sensitive adhesive tape according to any one of Claims 1 to 3, wherein the release liner includes the notch and/or slit in both edges in the width direction.

5. A release liner comprising a notch and/or slit in at least one edge in a width direction of the release liner.
